# EUROPEAN PATENT APPLICATION

(11) **EP 2 452 571 A1**
(43) Date of publication of application: **16.05.2012**
(21) Application number: 10191199.8
(22) Date of filing: 15.11.2010
(51) Int. Cl.: A23L 1/29, A23L 1/30, A23L 1/305

(54) **Array of complementary infant/young child nutritional compositions**

(71) Applicant: Nestec S.A., 1800 Vevey (CH)
(72) Inventor: Klassen, Petra Gerda, 1806, St. Legier (CH); Magliola, Corinne, 1009, Pully (CH)
(74) Representative: Corticchiato, Olivier

(57) **Abstract**

The present invention relates to infant/young child nutrition. A set of nutritional compositions having beneficial effects to infants/young children is disclosed. The set of nutritional compositions comprises at least two compositions with varying amounts of components which impart a beneficial effect to the infants young/children. A nutrition kit for infants/young children comprising the set of nutritional compositions is also disclosed as well as a method for manufacturing the set of nutritional components. A dosage regimen is also disclosed.

## Description

### Field of invention

The present invention relates to the field of infant/young child nutrition. In particular, the invention relates to a set of nutritional compositions having beneficial effects in infants/young children. The set of nutritional compositions comprises at least two compositions which complement each other in the intended beneficial effect. The invention further relates to the set of nutritional compositions for use in providing health benefits. The invention further relates to a nutrition kit for infants/young children comprising the set of nutritional compositions. The invention further relates to a method for preparing the set of nutritional compositions. The invention further relates to an administration regimen for infants/young children.

### Background of the invention

Infant formulae, follow-up formulae and growing-up milks aimed at different age groups of 0 to 6 months, 6 months to 1 year and 1 year to 2 years are known. These infant formulae, follow-up formulae and growing-up milks aim to meet the requirements of infant/young children at the different ages of the infant/young children and to provide a balanced nutrition to the infant/young children.

An age-tailored nutrition system for infants/young children is described in international patent application No. WO 2009/068549, wherein a protein nature and content are adapted to specific age groups.

A number of specific components present in infant/young child nutritional formulae on the market are intended to provide some beneficial effects which go beyond that of a balanced nutrition. For instance, probiotics have been included in infant/young child nutritional formulae to provide some benefits such as gut maturation, gut protection and recovery from gut discomfort.

These infant/young child nutritional formulae intend to provide some benefits which are not necessarily specific to a target group. Also the benefits provided do not necessarily address more specific conditions which may affect a particular target group.

### Object of the invention

There is therefore a need for providing infant/young child nutritional formulae which are more specific to a particular target group and which are more effective in providing a defined intended beneficial effect beyond that of infant/young child nutritional formulae known in the art.

This object is solved by means of the independent claims. The dependent claims further develop the central idea of the invention.

### Summary of the invention

Thus, in a first aspect, the invention relates to a set of nutritional compositions comprising at least two compositions wherein a composition of each one of the compositions is selected to complement the other composition to provide an intended beneficial effect.

The invention further relates to a use of the set of nutritional compositions according to any of claims 1 to 9 in prevention or treatment of diarrhoea, prevention or treatment of gut discomfort, reduction of risk of obesity later in life, and of related disorders like hypertension, diabetes, reduction of risk of allergies later in life, reducing cardiovascular diseases later in life, reducing risk of infections, ensuring a normal growth curve, ensuring a good maturation of the immune system, of the gut barrier, ensuring optimal cognitive development.

The invention further relates to a nutrition kit for infants/young children. The nutritional kit comprising the set of nutritional compositions according to any of claims 1 to 9, wherein the nutritional compositions are packed in single dose units, each unit comprising sufficient nutritional composition to prepare a single serving upon reconstitution.

A method for the manufacture of a set of nutritional compositions having a beneficial effect in infants/young children is also described. The method comprises the steps of:
- preparing at least two nutritional compositions for infants/young children,
- selecting at least one component intended for the beneficial effect; and
- combining said at least one component with the nutritional compositions such that the compositions complement each other in the intended beneficial effect.

An administration regimen for infants/young children is also disclosed. The administration regimen for infants/young children comprises the step of feeding at least two nutritional compositions to said infant/young child, wherein said nutritional compositions complement each other to have a beneficial effect on the infant/young child.

### Detailed description

For a complete understanding of the present invention and the advantages thereof, reference is made to the following detailed description of the invention

It should be appreciated that various embodiments of the present invention can be combined with other embodiments of the invention and are merely illustrative of the specific ways to make and use the invention and do not limit the scope of the invention when taken into consideration with the claims and the following detailed description.

In the present description, the following words are given a definition that should be taken into account when reading and interpreting the description, examples and claims.

Infant: according to the Commission Directive 2006/141/EC of 22 December 2006 on infant formulae and follow-on formulae, article 2 (a), the term "infants" means children under the age of 12 months.

Young Children: according to the Commission Directive 2006/141/EC of 22 December 2006 on infant formulae and follow-on formulae, article 2 (b), the term "young children" means children aged between one and three years.

Infant formulae: according to the Commission Directive 2006/141/EC of 22 December 2006 on infant formulae and follow-on formulae, article 2 (c), the term "infant formulae" means foodstuffs intended for particular nutritional use by infants during the first months of life and satisfying by themselves the nutritional requirements of such infants until the introduction of appropriate complementary feeding. It has to be understood that infants can be fed solely with infant formulas, or that the infant formula can be used by the carer as a complement of human milk. It is synonymous to the widely used expression "starter formula".

Follow-on formulae: according to the Commission Directive 2006/141/EC of 22 December 2006 on infant formulae and follow-on formulae, article 2 (d), the term "follow-on formulae" means foodstuffs intended for particular nutritional use by infants when appropriate complementary feeding is introduced and constituting the principal liquid element in a progressively diversified diet of such infants.

Probiotic: according to the paper Probiotics in Man and Animals, J. Appl Bacteriol. 66: 365-378, a probiotic is defined as a live microbial feed supplement which beneficially affects the host by improving its intestinal microbial balance.

The present invention relates to a set of nutritional compositions comprising at least two compositions. The nutritional compositions forming part of the set of nutritional compositions have a beneficial effect in infants/young children.

It is preferable that the nutritional compositions are infant or follow on formulae.

In the present invention, the nutritional compositions can be in a form of a powder to be reconstituted with water. The nutritional compositions can be in a form of a concentrate to be diluted. Upon reconstitution or dilution of the nutritional compositions an end product is preferably a liquid.

The beneficial effects of the set of nutritional compositions go beyond the benefit of providing a balanced nutrition. The beneficial effects may be any of prevention or treatment of diarrhoea, prevention or treatment of gut discomfort, alleviation of discomfort caused by diarrhoea, reduction of risk of obesity later in life (including obesity related disorders for example hypertension and diabetes), reduction of risk of allergies later in life, reducing cardiovascular diseases later in life, reducing risk of infections, ensuring a good maturation of the immune system, ensuring a good maturation of the gut barrier, ensuring optimal cognitive development. By good maturation it is to be understood that the maturation follows a growth curve that is seen when infants/young children are fed with breast milk.

The compositions forming part of the set of nutritional compositions are selected to complement each other in the intended beneficial effect. In this way, a more specific and more efficient result can be achieved. This means that an overall intended benefit is achieved through consumption of the set of nutritional compositions. Independently, the compositions of the set of nutritional compositions do not have the same effect as when used together in the set of nutritional compositions. Thus the compositions act in a synergistic manner and a desired effect is enhanced and greater than the sum of the individual effects of each composition.

The compositions used typically comprise a fat source, a protein source and a carbohydrate source.

The fat source in the nutritional compositions may be selected from milk fat and/or vegetable fat. The vegetable fat includes palm olein, high oleic sunflower oil, high oleic safflower oil, canola oil, soy oil, fish oil, coconut oil, cell oils derived from fungi or any mixtures thereof.

The carbohydrate source includes lactose, saccharose, maltodextrin, glucose syrup, starch and mixtures thereof. The compositions may further comprise proteins such as intact or hydrolysed protein, proteins associated with milk fat globule membrane (MFGM), TGF-B (Transforming Growth Factor), casein, whey, soy protein, lactoferrin or any mixtures thereof.

The compositions used may comprise milk fat globule membranes (MFGM).

In addition, the compositions may comprise components selected from vitamins, minerals, trace elements, nucleosides, nucleotides, prebiotics and probiotics

The vitamins can be vitamin A, beta-carotene, vitamin D, vitamin E, vitamin K1, vitamin C, vitamin B1, vitamin B2, niacin, vitamin B6, folic acid, pantothenic acid, vitamin B12, biotin, choline, inositol, or any mixtures thereof.

The minerals can be sodium, potassium, chloride, calcium, phosphorus, magnesium, manganese or any mixtures thereof.

The trace elements can be iron, iodine, copper, zinc, selenium, fluorine, chromium, molybdenum or any mixtures thereof

In the set of nutritional compositions, the individual compositions differ from each other in the nature and/or amount of at least one component.

The component which differs from one composition of the set of nutritional compositions another composition may be any of vitamins, minerals, nucleosides, nucleotides, prebiotics, probiotics, proteins, fatty acids, the fat source, the protein source and the carbohydrate source.

The prebiotic is a non-digestible food ingredient that beneficially affects the host by selectively stimulating the growth and/or activity of one or a limited number of bacteria in the colon, and thus improves host health. Such ingredients are non-digestible in the sense that they are not broken down and absorbed in the stomach or small intestine and thus pass intact to the colon where they are selectively fermented by the beneficial bacteria. Examples of prebiotics include certain oligosaccharides, such as fructooligosaccharides (FOS), Acacia gum and galactooligosaccharides (GOS). A combination of prebiotics may be used such as 90% GOS with 10% short chain fructooligosaccharides such as the product sold under the trade mark Raftilose® or 10% inulin such as the product sold under the trade mark Raftiline®.

A particularly preferred prebiotic is a mixture of galacto-oligosaccharide(s), N-acetylated oligosaccharide(s) and sialylated oligosaccharide(s) in which the N- acetylated oligosaccharide(s) comprise 0.5 to 4.0% of the oligosaccharide mixture, the galacto-oligosaccharide(s) comprise 92.0 to 98 . 5 % of the oligosaccharide mixture and the sialylated oligosaccharide(s) comprise 1.0 to 4.0% of the oligosaccharide mixture. This mixture is hereinafter referred to as "CMOS-GOS".

Preferably, any of the compositions of the set for the invention contain from 2.5 to 15.0 wt% CMOS-GOS on a dry matter basis with the proviso that the composition comprises at least 0.02 wt% of an N- acetylated oligosaccharide, at least 2.0 wt% of a galacto-oligosaccharide and at least 0.04 wt% of a sialylated oligosaccharide.

**S u i t a b l e** N-acetylated oligosaccharides include GalNAcαl,3Galβl,4Glc and Galβ1,6GalNAcα1,3Galβ1,4Glc. The N-acetylated oligosaccharides may be prepared by the action of glucosaminidase and/or galactosaminidase on N-acetyl-glucose and/or N-acetyl galactose. Bqually, N-acetyl-galactosyl transferases and/or N-acetyl-glycosyl transferases may be used for this purpose. The N-acetylated oligosaccharides may also be produced by fermentation technology using respective enzymes (recombinant or natural) and/or microbial fermentation. In the latter case the microbes may either express their natural enzymes and substrates or may be engineered to produce respective substrates and enzymes. Single microbial cultures or mixed cultures may be used. N-acetylated oligosaccharide formation can be initiated by acceptor substrates starting from any degree of polymerisation (DP) from DP=1 onwards. Another option is the chemical conversion of keto-hexoses (e.g. fructose) either free or bound to an oligosaccharide (e.g. lactulose) into N-acetylhexosamine or an N-acetylhexosamine containing oligosaccharide as described in Wrodnigg, T. M.; Stutz, A.E. (1999) Angew. Chem. Int. Ed. 38:827-828.

Suitable galacto-oligosaccharides include Galβl, 6Gal, Galβl,6Galβl,4Glc, Galβl,6Galβl,6Glc, Galβl,3Galβl,3Glc, Galβl,3Galβl,4Glc, Galβl,6Galβl,6Galβl,4Glc, Galβl,6Galβl,3Galβl,4Glc, Galβl,3Galβl,6Galβl,4Glc, Galβl, 3Galβl,3Galβl,4Glc, Galβl,4Galβl,4Glc and Galβl,4Galβl,4Galβl,4Glc.

Synthesised galacto-oligosaccharides such as Galβl,6Galβl, 4Glc, Galβl,6Galβl,6Glc, Galβl,3Galβl,4Glc, Galβl,6Galβl,6Galβl,4Glc, Galβl,6Galβl,3Galβl, 4Glc and Galβl,3Galβl,6Galβl,4Glc, Galβl,4Galβl,4Glc and Galβl,4Galβl,4Galβl,4Glc and mixtures thereof are commercially available under the trademarks Vivinal® and Elix'or®. Other suppliers of oligosaccharides are Dextra Laboratories, Sigma-Aldrich Chemie GmbH and Kyowa Hakko Kogyo Co.,Ltd. Alternatively, specific glycosyltransferases, such as galactosyltransferases may be used to produce neutral oligosaccharides.

Suitable sialylaled oligosaccharides include NeuAcα2,3Galβl,4Glc and NeuAcα2,6Galβl,4Glc. These sialylated oligosaccharides may be isolated by chromatographic or filtration technology from a natural source such as animal milks. Alternatively, they may also be produced by biotechnology using specific sialyltransferases either by enzyme based fermentation technology (recombinant or natural enzymes) or by microbial fermentation technology. In the latter case microbes may either express their natural enzymes and substrates or may be engineered to produce respective substrates and enzymes. Single microbial cultures or mixed cultures may be used. Sialyl-oligosaccharide formation can be initiated by acceptor substrates starting from any degree of polymerisation (DP) from DP=1 onwards.

Examples of suitable probiotic micro-organisms which may be used include yeasts such as Saccharomyces, *Debaromyces, Candida, Pichia* and *Torulopsis,* **moulds** such as Aspergillus, *Rhizopus, Mucor,* and *Penicillium* and *Torulopsis* and bacteria such as the genera *Bifidobacterium, Bacteroides, Clostridium, Fusobacterium, Melissococcus,* Propionibacterium, *Streptococcus, Enterococcus,* Lactococcus, Staphylococcus, *Peptostrepococcus,* Bacillus, *Pediococcus, Micrococcus, Leuconostoc, Weissella, Aerococcus, Oenococcus* and *Lactobacillus.* Specific examples of suitable probiotic micro-organisms are: *Saccharomyces cereviseae, Bacillus coagulans, Bacillus licheniformis, Bacillus subtilis, Bifidobacterium bifidum, Bifidobacterium infantis, Bifidobacterium longum, Enterococcus faecium, Enterococcus faecalis, Lactobacillus acidophilus, Lactobacillus alimentarius, Lactobacillus casei subsp. casei, Lactobacillus casei Shirota, Lactobacillus curvatus, Lactobacillus delbruckii subsp. lactis, Lactobacillus farciminus, Lactobacillus gasseri, Lactobacillus helveticus, Lactobacillus johnsonii, Lactobacillus reuteri, Lactobacillus rhamnosus (Lactobacillus GG), Lactobacillus sake, Lactococcus lactis, Micrococcus varians, Pediococcus acidilactici,* Pediococcus pentosaceus, *Pediococcus acidilactici, Pediococcus halophilus, Streptococcu salivarius, Streptococcus faecalis, Streptococcus thermophilus, Staphylococcus carnosus,* and *Staphylococcus xylosus.*

Preferred probiotic bacterial strains include *Lactobacillus rhamnosus* ATCC 53103 obtainable from Valio Oy of Finland under the trade mark LGG, *Lactobacillus rhamnosus* CGMCC 1.3724, *Lactobacillus paracasei* CNCM I― 2116, *Lactobacillus reuteri* ATCC 55730 and *Lactobacillus reuteri* DSM 17938 obtainable from BioGaia AB, *Bifidobacterium lactis* CNCM 1-3446 sold *inter alia* by the Christian Hansen company of Denmark under the trade mark Bb 12 and *Bifidobacterium longum* ATCC BAA-999 sold by Morinaga Milk Industry Co. Ltd. of Japan under the trade mark BB 53*6, Lactobacillus helveticus* CNCM 1-4095, *Bifidobacterium longum* CNCM *I―2618 , Bifidobacterium breve* CNCM *I―3865, Lacococcus lactis* CNCM 1-4154, *Lactobacillus paracasei* 33 (Uni *President) , Streptococcus salivarius* K12 ATCC BAA-1024 *(BLIS),Streptococcus thermophilus* CNCM I― 3915, *Lactobacillus johnsonii* CNCM 1-1225 *Lactobacillus fermentum* VRI-033 PCC Strain NM 02/31074 (Probiomix) or *Lactobacillus acidophilus* L92 strain FERM BP.4981 from Calpis.

The probiotic micro-organisms used can be alive or dead probiotic micro-organisms.

The probiotics are preferably present in an amount of 10³ to 10¹² cfu/g, more preferably 10⁶ to 10¹¹ cfu/g, even more preferably 10⁴ to 10⁹ cfu/g, most preferably 10⁷ to 10⁹ cfu/g composition or per mL of composition. The amount may vary from one composition of the set to the next. For instance, it was found that by providing a first composition comprising *Bifidobacterium lactis* CNCM 1-3446 and a second composition comprising *Lactobacillus reuteri* DSM 17938, an effect of said probiotics are sustained and enhanced in a way that could not be matched by a unique probiotic load.

The compositions may optionally contain other substances which may have a beneficial effect such as nucleotides, nucleosides, and the like. Nucleotides may be selected from cytidine monophosphate (CMP), uridine monophosphate (UMP), adenosine monophosphate (AMP), guanosine monophosphate (GMP) or any mixtures thereof.

Any of the nutritional compositions may comprise fatty acids such as medium chain triglycerides and/or long-chain polyunsaturated fatty acids (LC-PUFA). Fatty acids have been linked to benefits in infant/young child development. Preferably, the LC-PUFA's are selected from docosahexaenoic acid (DHA), arachidonic acid (ARA), eicosapentaenoic acid (EPA) or any mixtures thereof. In an embodiment of the present invention, a set may comprise a first composition comprising as fatty acids a mixture of docosahexaenoic acid (DHA) and arachidonic acid (ARA), while the second composition comprises docosahexaenoic acid (DHA) only. When the first composition is fed for a period of 12 to 24 months and the second composition is fed subsequently for a period of at least 6 months, a long-term benefit relating to brain development in the infant / young child has been observed.

The beneficial effect may be any of the effects described herein and which goes beyond that of a balanced nutrition.

As an example, the set of the composition may be intended for the alleviation of discomfort caused by diarrhea. Thus, a first composition may comprise a component which helps in the treatment of diarrhoea. This may be a probiotic for instance *Lactobacillus rhamnosus* CGMCC 1.3724. A second composition comprises a further component which treats gut discomfort after diarrhea. This may be *Lactobacillus reuteri* DSM 17938. Thus, the compositions complement each other in the intended beneficial effect of alleviating discomfort caused by diarrhoea.

As another example, the set of the invention may be for facilitating weaning. Thus, a first composition may comprise *Bifidobacterium lactis* CNCM 1-3446, while a second composition may comprise *Lactobacillus paracasei* 33 (Uni President). The combination of such compositions has the overall beneficial effect on the infants / young children that weaning occurs more smoothly. As an indicator, it was found that infants fed the set of the invention compared to those fed traditional infant formulas had fewer episodes of crying when weaning started.

Alternatively, the types of fatty acids may vary from one composition to the next. For instance, one composition may comprise both DHA and ARA with an appropriate ratio, while the other may comprise DHA only. In combination, these compositions provide health benefits such as healthy development of brain and visual function, and healthy immune development.

The set of nutritional compositions may comprise the same components but differ in the amount of at least one component. For instance, the fat content may be varied from one composition to another. Thus a set according to the invention may comprise a first composition comprising 5.0-6g fat/100kcal and a second composition comprising 3-5g fat/100kcal. When each composition is fed to a young child for a period of 6 months to 1 year, in particular at an age of 1 to 2 years and at an age of above 2 years respectively, the benefits observed are that the risk of obesity later in life and the tendency to be overweight is decreased compared to when infants were fed traditional compositions.

The compositions forming part of the set of the present invention may be fed to an infant / young child for a period of 1 day to 12 months. This time period may vary on the intended beneficial effect. For instance, if it desired to alleviate the discomfort caused by diarrhoea, the compositions of the set may be fed each for a period of 1 to 5 days. As another example, if the desired beneficial effect is on the long term, the period may be of 1 month to 12 months, preferably about 6 months.

The characteristic of the set according to the invention is that the elements present in the compositions synergize to achieve a particular benefit.

Indeed, it was found that by feeding an infant a nutritional composition comprising *B. lactis* followed by feeding same said infant with a nutritional composition which differs from the previous one only in that it further comprises *L. reuteri* a beneficial effect is obtained. The beneficial effect is enhanced compared to when the infant is fed only one of the compositions.

In an embodiment of the present invention, the set comprises two compositions. In another embodiment, the set comprises three compositions. In yet another embodiment, the set comprises four compositions.

The compositions of the set may be intended for a particular age group. For example, the compositions may be intended for infants from 0 to 6 months, from 6 months to 1 year, from 1 year to 2 years or for young children older than 2 years.

In a set of the present invention, the compositions may be for the same age group or, alternatively, they may be for two or more consecutive age groups.

The set described herein may be used according to the invention in the prevention or treatment of diarrhoea, prevention or treatment of gut discomfort, alleviation of discomfort caused by diarrhoea, reduction of risk of obesity later in life, and of related disorders like hypertension and diabetes, reduction of risk of allergies later in life, reducing cardiovascular diseases later in life, reducing risk of infections, ensuring a normal growth curve, ensuring a good maturation of the immune system, of the gut barrier, and optimal cognitive development.

The invention further relates to a nutrition kit for infants/young children. The nutrition kit comprises the set of nutritional compositions as described above. Each one of the nutritional compositions is packed in a single dose unit. Each single dose unit comprises sufficient nutritional composition to prepare a single serving upon reconstitution with water.

A single serving generally comprises 8 to 35 g, preferably 10 to 30g, most preferably 11 to 28 g of powder to be reconstituted with between 80 to 300 mL water. It is preferable 90mL and 250 mL of water. Alternatively, if the nutritional composition is a concentrate, a single serving includes 1 to 50 mL of concentrate to be diluted with 50 to 250 mL of water.

The kit comprises the set of nutritional compositions as described herein. The single dose units can be in the form of capsules. The single dose units can also be in the form of stick packs or sachets. The capsules may be disposable capsules equipped with opening means contained within the capsule to permit draining of the formula directly from the capsule into a receiving vessel such as a bottle. Such a method of using capsules for dispensing an infant or young child nutritional composition is described in international patent application publication No. WO2006/077259. The nutritional compositions forming part of the set of nutritional composition scan thus be packed into individual capsules and presented to the consumer in multi-packs. The multi-packs may for example contain a sufficient number of capsules to meet the requirements of an infant for one week. Suitable capsule constructions are disclosed in internationals patent application publication No. WO2003/059778.

The present invention also relates to a method for the manufacture of the set of nutritional compositions having a beneficial effect on infants/young children.

A first step in the method consists in preparing at least two nutritional compositions for infants/young children.

The nutritional compositions may be prepared in any suitable manner. For example, an infant/young child composition may be prepared by blending together a protein source, a carbohydrate source, and a fat source in appropriate proportions to form a blend. Emulsifiers may be included in the blend. Vitamins and minerals may be added at this point but are usually added later to avoid thermal degradation. Any lipophilic vitamins, emulsifiers and the like may be dissolved into the fat source prior to blending. Water, preferably water which has been subjected to reverse osmosis, may then be mixed in to form a liquid mixture.

The liquid mixture may then be thermally treated to reduce bacterial loads. For example, the liquid mixture may be rapidly heated to a temperature in the range of about 80°C to about 110°C for about 5 seconds to about 5 minutes. This may be carried out by steam injection or by heat exchanger; for example a plate heat exchanger. The liquid mixture may then be cooled to about 60°C to about 85°C for example by flash cooling. The liquid mixture may then be homogenised for example in two stages at about 7 MPa to about 40 MPa in the first stage and about 2 MPa to about 14 MPa in the second stage. The homogenised mixture may then be further cooled to add any heat sensitive components such as vitamins and minerals. The pH and solids content of the homogenised mixture are conveniently standardised at this point. The homogenised mixture is transferred to a suitable drying apparatus such as a spray drier or freeze drier and converted to powder. The powder should have a moisture content of less than about 3% by weight. Alternatively, the homogenized mixture is concentrated.

A second step in the method consists in selecting at least one component intended for the beneficial effect.

It is understood that said at least one component in itself is not solely responsible for the intended beneficial effect. In fact, the invention relies on the complementarily of at least two compositions in achieving said beneficial effect. Thus, the component is selected for its ability in a complementary fashion to assist in providing the desired beneficial effect.

The method further comprises the step of combining least one component with at least one of said nutritional compositions such that the compositions complement each other to achieve the intended beneficial effect.

The component may be added to the powdered infant formula by dry mixing. Alternatively, the component may be added at an earlier stage during preparation of the nutritional compositions. A skilled person is able to determine when the incorporation of the selected component to the nutritional compositions should occur.

An administration regimen for infants/young children is also part of the invention. The administration regimen provides the benefits to the infants/young children. The administration regimen comprises a step of feeding an infant/young child a set of at least two nutritional compositions. As mentioned the nutritional compositions complement each other to have a beneficial effect on said infant/young child.

The compositions may be both fed in one feeding session. Alternatively, one composition is fed to the infant/young child for a period of 1 day to 12 months and the other composition is fed to the infant/young child for a period of 1 day to 12 months.

The nutritional compositions may be fed as the unique source of nutrition or may be part of a diet, e.g. for weaned infants/young children. Preferably, the compositions fed to the infant/young child encompass more than half of the meals for the infant/young/children.

Having thus described the present invention in detail and the advantages thereof, it is to be understood that the detailed description is not intended to limit the scope of the invention thereof.

What is desired to be protected by letters patent is set forth in the following claims.

## Claims

1. A set of nutritional compositions comprising at least two compositions, wherein a composition of each one of the compositions is selected to complement the other composition to provide an intended beneficial effect.

2. The set of nutritional compositions according to claim 1, wherein the at least two compositions differ from each other in a nature and/or an amount of at least one component.

3. The set of nutritional compositions according to claim 2, wherein the at least one component is any of vitamins, minerals, trace elements, nucleosides, nucleotides, prebiotics, probiotics, lactoferrin, fatty acids, fat, carbohydrate, protein, growth factors, immunoglobulins, MFGM components, oligosaccharides.

4. The set of nutritional compositions according to claim 3, wherein the probiotics are selected from *Lactobacillus rhamnosus* ATCC 53103 obtainable from Valio Oy of Finland under the trade mark LGG, *Lactobacillus rhamnosus* CGMCC 1.3724, *Lactobacillus paracasei* CNCM 1-2116, *Lactobacillus reuteri* ATCC 55730 and *Lactobacillus reuteri* DSM 17938 obtainable from BioGaia AB, *Bifidobacterium lactis* CNCM 1-3446 sold *inter alia* by the Christian Hansen company of Denmark under the trade mark Bb 12 and *Bifidobacterium longum* ATCC BAA-999 sold by Morinaga Milk Industry Co. Ltd. of Japan under the trade mark *BB536, Lactobacillus helveticus* CNCM 1-4095, *Bifidobacterium longum* CNCM *I―2618,Bifidobacterium breve* CNCM *I―3865, Lacococcus lactis* CNCM 1-4154, *Lactobacillus paracasei* 3 3 ( U n i *President),Streptococcus salivarius* K12 ATCC BAA-1024 *(BLIS),Streptococcus thermophilus* CNCM 1-3915, *Lactobacillus johnsonii* CNCM 1-1225 *Lactobacillus fermentum* VRI-033 PCC Strain NM 02/31074 (Probiomix) or *Lactobacillus acidophilus* L92 strain FERM BP.4981 from Calpis.

5. The set of nutritional compositions according to claim 3, wherein the probiotics can be dead or alive or any mixture thereof.

6. The set of nutritional compositions according to any of the preceding claims, wherein the nutritional compositions is in form of a powder or a concentrate.

7. The set of nutritional compositions according to any of the preceding claims, wherein the beneficial effect is any of prevention or treatment of diarrhoea, prevention or treatment of gut discomfort, alleviation of discomfort caused by diarrhoea, reduction of risk of obesity later in life, and of related hypertension and diabetes, reduction of risk of allergies later in life, reducing cardiovascular diseases later in life, reducing risk of infections, ensuring a normal growth curve, ensuring a good maturation of the immune system, of the gut barrier, and of the cognitive function..

8. The set of nutritional compositions according to any of the preceding claims, wherein a first composition is intended to treat diarrhoea and a second composition is intended to treat gut discomfort after diarrhoea.

9. The set of nutritional compositions according to any of the preceding claims, wherein a first composition is intended to facilitate gut discomfort or pain associated with the administration of antibiotics and a second composition is intended to restore a natural gut flora after the administration of antibiotics.

10. The set of nutritional compositions according to any of the preceding claims, wherein a first composition is intended to improve a sleep pattern and a second composition is intended to induce create active learning ability in the infant.

11. A use of the set of nutritional compositions according to any of the preceding claims in prevention or treatment of diarrhoea, prevention or treatment of gut discomfort, alleviation of discomfort caused by diarrhoea, reduction of risk of obesity later in life, reduction of risk of allergies later in life, reducing cardiovascular diseases later in life, reducing risk of infections, ensuring a normal growth curve, ensuring a good maturation of the immune system, reduction of allergies, reduction infections, improving sleep pattern, reduction of crying time, reduction of gut discomfort, improving learning ability, stimulation of cognitive ability or combination thereof..

12. A nutritional kit for infants/young children comprising the set of nutritional compositions according to any of claims 1 to 10, wherein the nutritional compositions are packed in single dose units, each single dose unit comprising sufficient nutritional composition to prepare a single serving.

13. The nutritional kit for infants/young children according to claim 12, wherein the single dose units are capsules.

14. A method for the manufacture of a set of nutritional compositions having a beneficial effect in infants/young children comprising the steps of:
- preparing at least two nutritional compositions for infants/young children,
- selecting at least one component intended for the beneficial effect and
- combining said at least one component with at least one of said nutritional composition such that the compositions complement each other in the intended beneficial effect.

15. The method according to claim 14, wherein the components intended for the beneficial effect are selected from vitamins, minerals, nucleosides, nucleotides, prebiotics, probiotics, fatty acids, fat, carbohydrate, protein, growth factors, immunoglobulins, MFGM components, oligosaccharides, lysozyme.

16. The Method according to any of claims 14 or 15, wherein the beneficial effects are any of prevention or treatment of diarrhoea, prevention or treatment of gut discomfort, alleviation of discomfort caused by diarrhoea, reduction of risk of obesity later in life, reduction of risk of allergies later in life, reducing cardiovascular diseases later in life, reducing risk of infections, ensuring a normal growth curve, ensuring a good maturation of the immune system, reduction of allergies, reduction infections, improving sleep pattern, reduction of crying time, reduction of gut discomfort, improving learning ability, stimulation of cognitive ability or combination thereof..

17. An administration regimen for infants/young children comprising the step of feeding the set of at least two nutritional compositions according to any of claims 1 to 10.

18. The regimen according to claim 17, wherein a first nutritional composition is fed to said infant/young child for a period of 1 day to 12 months, and a second nutritional composition is fed subsequently for a period of 1 day to 12 months.

19. The regimen according to any of claims 17 and 18, wherein the two nutritional compositions fed to the infant/young child encompass more than half of the meals of the infant young/child.
